# DEMANDE DE BREVET EUROPEEN

(11) **EP 2 317 337 A1**
(43) Date de publication de la demande: **04.05.2011**
(21) Numéro de dépôt: 09306049.9
(22) Date de dépôt: 03.11.2009
(51) Int. Cl.: G01S 13/75, G06K 19/077, H04B 5/00, H04W 8/20

(54) **Système de transfert sans contact de données personnelles**

(71) Demandeur: Gemalto SA, 92190 Meudon (FR)
(72) Inventeur: Fine, Jean-Yves, 13006, MARSEILLE (FR)

(57) **Abrégé**

L'invention concerne un système de transfert de données personnelles sans contact entre d'une part un terminal mobile (10) comprenant une première antenne (14) couplée à une première puce (13) coopérant avec une première mémoire (11, 12), et d'autre part une seconde mémoire (16) coopérant avec une seconde puce (17), la seconde puce (17) étant couplée avec une seconde antenne (18).

Selon l'invention, la seconde mémoire (16) coopérant avec la seconde puce (17) et la seconde antenne (18) sont comprises sur un transpondeur radiofréquence passif (15) alimenté par le champ électromagnétique émis par la première antenne (14) pendant le transfert de données personnelles.

## Description

Le domaine de l'invention est celui de la radiotéléphonie mobile et concerne plus précisément un système de transfert sans contact de données personnelles.

Dans un système de radiotéléphonie mobile, par exemple de type GSM ou 3G, des terminaux d'utilisateur mobiles communiquent avec des stations de base faisant partie du réseau de télécommunications.

Chaque terminal mobile comprend classiquement une antenne, un écran, un clavier, ainsi qu'un élément sécurisé tel qu'une carte SIM (en GSM) ou USIM (en 3G).

La carte (U)SIM est contrôlée par l'opérateur du réseau qui peut y lire ou y écrire des données. L'utilisateur du terminal mobile peut également avoir accès à la carte SIM, notamment pour y stocker des données personnelles, tels que des numéros de téléphone et les noms des personnes ou organismes associés à ces numéros de téléphone. Ces données personnelles peuvent également être des photos, des vidéos ou des morceaux de musique en format MP3.

Ces données personnelles peuvent également, généralement au choix de l'utilisateur, être stockées dans une mémoire du terminal mobile lui-même. Lorsque l'utilisateur désire changer de terminal mobile, il transfère ses données personnelles de la mémoire de son ancien terminal mobile vers sa carte (U)SIM qu'il peut ensuite insérer dans son nouveau terminal mobile afin de pouvoir continuer à exploiter ses données personnelles.

Un problème largement connu se pose lorsque l'utilisateur perd son terminal mobile : toutes les données personnelles qui y étaient stockées, que ce soit dans la carte (U)SIM ou dans le terminal lui-même, sont définitivement perdues si l'utilisateur n'avait pas préalablement songé à les sauvegarder ailleurs.

Le brevet EP-10634670 propose une solution à ce problème. Cette solution consiste à, sur initiative de l'utilisateur, transférer les données personnelles présentes sur sa carte SIM vers un serveur distant, par exemple par voie OTA. Toutes ses données personnelles sont donc stockées sur un serveur distant. En cas de perte de son terminal mobile, l'utilisateur, après avoir racheté une nouvelle carte SIM et un nouveau terminal mobile, peut demander à l'opérateur du réseau qu'il transmette du serveur distant vers sa nouvelle carte SIM les données personnelles qui y étaient stockées. L'utilisateur récupère ainsi ses données personnelles.

L'inconvénient de cette solution est que le service de stockage des données personnelles est facturé par l'opérateur à l'utilisateur, soit sur une base mensuelle, soit à chaque sauvegarde de données personnelles.

Une autre solution connue consiste à sauvegarder les données personnelles comprises dans le terminal mobile dans un ordinateur personnel. Ce type de sauvegarde est appelé « synchronisation ». L'inconvénient de cette solution est que l'utilisateur doit songer à régulièrement effectuer cette synchronisation, faute de quoi les données personnelles qu'il aurait enregistrées dans son terminal mobile après la dernière synchronisation ne seraient pas sauvegardées.

Un autre inconvénient est qu'un ordinateur personnel peut tomber en panne, être dérobé ou devoir être reconfiguré, par exemple suite à un virus informatique. Dans de tels cas, les données personnelles sont généralement perdues.

On connaît par ailleurs, également dans le monde de la téléphonie mobile, les transactions sans contact dites NFC (Near Field Communication en anglais - Communication en champ proche en français). Ces transactions sont généralement de type bancaire, c'est-à-dire qu'elles concernent le paiement de biens ou de services auprès de commerçants.

La technologie NFC permet également l'échange de cartes de visite entre deux utilisateurs de terminaux mobiles. Un premier terminal mobile comprend à cet effet une première antenne couplée à une première puce coopérant avec une première mémoire renfermant la carte de visite du premier utilisateur. Le terminal mobile du second utilisateur comprend lui, une seconde mémoire coopérant avec une seconde puce, la seconde puce étant couplée avec une seconde antenne. Une transmission de la carte de visite du terminal du premier utilisateur vers le terminal du second utilisateur peut s'opérer lorsque par action volontaire du premier utilisateur, sa carte de visite est transmise sans contact vers le terminal du second utilisateur (dans la seconde mémoire, via la seconde antenne).

Cette solution n'a cependant pas d'intérêt dans le cas de sauvegarde de données personnelles car le second terminal n'est en général pas la propriété du premier utilisateur et ce second terminal n'est pas destiné à sauvegarder les données personnelles du premier utilisateur.

La présente invention a notamment pour objectif de pallier à ces inconvénients.

Plus précisément, un des objectifs de l'invention est de proposer un système simple, efficace et très peu coûteux de sauvegarde de données personnelles comprises dans un terminal mobile.

Cet objectif, ainsi que d'autres qui apparaîtront par la suite est atteint grâce à un système de transfert de données personnelles sans contact entre d'une part un terminal mobile comprenant une première antenne couplée à une première puce coopérant avec une première mémoire, et d'autre part une seconde mémoire coopérant avec une seconde puce, la seconde puce étant couplée avec une seconde antenne.

Selon l'invention, la seconde mémoire coopérant avec la seconde puce et la seconde antenne sont comprises sur un transpondeur radiofréquence passif alimenté par le champ électromagnétique émis par la première antenne pendant le transfert de données personnelles.

L'utilisation d'un transpondeur radiofréquence passif permet de remédier aux problèmes évoqués ci-dessus puisqu'il ne nécessite pas d'alimentation extérieure, peut être constitué par un élément compact tel qu'un tag ou une carte sans contact.

Le tag comporte préférentiellement une face adhésive de manière à le rendre solidaire d'un support. Ceci permet de ne pas égarer le tag.

Dans un mode de réalisation avantageux, la première mémoire comporte les données personnelles.

Préférentiellement, les données personnelles comprennent les contacts et numéros de téléphone associés mémorisés dans le terminal mobile.

Avantageusement, la seconde mémoire comporte les données personnelles.

D'autres caractéristiques et avantages de l'invention apparaîtront à la lecture suivante de deux modes de réalisation avantageux de l'invention, donnés à titre illustratif et non limitatif, et des figures annexées représentant :
- la figure 1, un premier mode de réalisation préférentiel du système selon l'invention ;
- la figure 2, un deuxième mode de réalisation préférentiel du système selon l'invention.

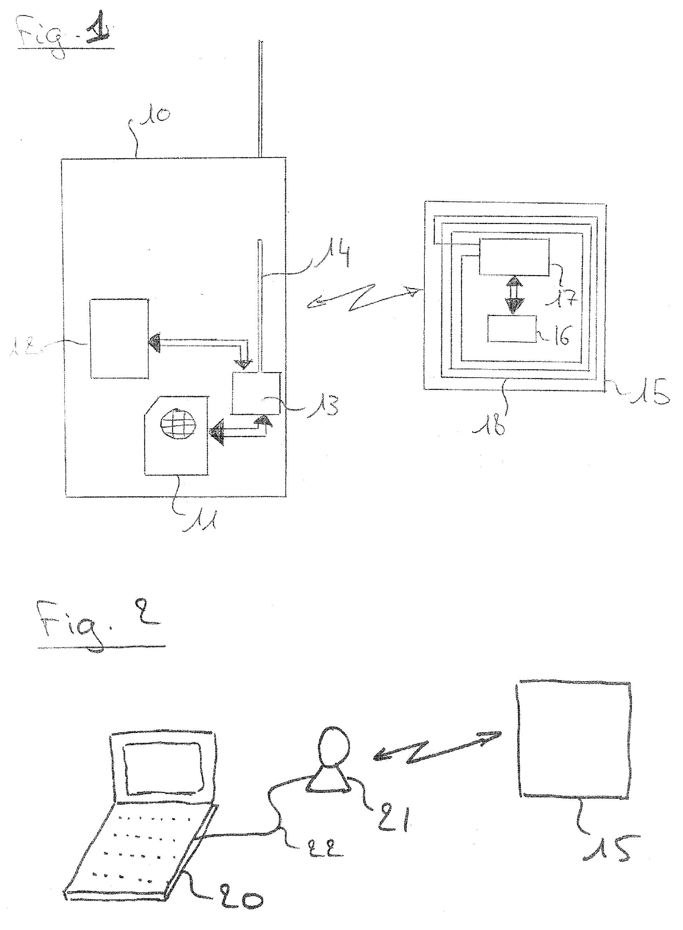

Sur la figure 1 annexée, un terminal mobile 10 est destiné à communiquer dans un réseau de radiotéléphonie mobile. Le terminal 10 comporte de manière classique un clavier et un écran (non représentés), ainsi qu'un élément sécurisé 11 géré par l'opérateur du réseau. Cet élément sécurisé 11 est soit une carte SIM classique (dans le système GSM) ou une carte USIM (dans le système de troisième génération). La carte (U)SIM comporte une première mémoire non représentée renfermant notamment des donnée personnelles du détenteur du terminal 10.

Ces données personnelles comprennent les contacts et numéros de téléphone associés du détenteur du terminal 10.

A titre alternatif ou complémentaire, le terminal 10 peut également comporter une mémoire 12 dans laquelle sont stockés les contacts et numéros de téléphone associés du détenteur du terminal 10.

Les mémoires 11 et 12 sont raccordées par des bus à une première puce 13, typiquement une puce NFC. La puce 13 est couplée à une antenne 14 afin de pouvoir envoyer et/ou recevoir des données, et notamment les données personnelles stockées dans les mémoires 11, 12 vers un élément extérieur au terminal 10. Selon l'invention, ces données personnelles peuvent être stockées sur un transpondeur 15 radiofréquence passif alimenté par le champ électromagnétique émis par l'antenne 14 pendant le transfert de données personnelles. Le transpondeur 15 comporte à cet effet une seconde mémoire 16 coopérant avec une seconde puce 17, cette seconde puce 17 étant couplée avec une seconde antenne 18, préférentiellement également de type NFC.

Le transpondeur 15 peut être constitué par un tag ou par une carte sans contact par exemple.

L'avantage d'employer un tag pour le stockage des données personnelles est le suivant : un tag est un élément très peu coûteux, autonome, qui peut être collé sur de nombreux supports, par exemple sur un carnet d'adresses, dans un tiroir de bureau ou une entrée d'un logement. Il n'a pas besoin d'alimentation, est sans valeur marchande et a donc peu de risque d'être volé, et la probabilité qu'il cesse de fonctionner est bien moindre que celle d'un ordinateur personnel. Chaque membre d'une famille ou chaque employé d'une société peut donc disposer à très faible coût, de l'ordre de quelques Euros, d'un tag. Il en va de même d'une carte sans contact qui elle n'est cependant pas d'emblée positionnable sur un support quelconque (de préférence non métallique) et qui peut donc se perdre. A cet effet, le tag selon l'invention est de type étiquette électronique et comporte une face adhésive de manière à le rendre solidaire d'un support.

Le tag est de type RFID (de l'anglais Radio Frequency IDentification) et fonctionne selon une approche NFC.

Les étiquettes électroniques sont de petits objets, tels que des étiquettes autoadhésives, qui peuvent être collées ou incorporées dans des objets ou. Les radio-étiquettes comprennent une antenne associée à une puce électronique qui leur permet de recevoir et de répondre aux requêtes radio émises depuis l'émetteur-récepteur, constitué par le terminal mobile de l'utilisateur.

Le champ électromagnétique émis par l'antenne 14 du terminal mobile 10 permet d'alimenter la puce 17 et la mémoire 16 pendant le transfert des données personnelles de la mémoire 11 ou 12 vers la mémoire 16. Les puces 13 et 17 gèrent les lectures et écritures de ces mémoires à l'aide de logiciels appropriés.

Un tel logiciel est, pour l'écriture du terminal 10 vers le tag 15, incorporé dans la puce 13 ou dans les mémoires 11 ou 12. Le logiciel est activé par l'utilisateur lors d'une sauvegarde de ses données personnelles, de la même manière qu'il le ferait pour une synchronisation comme évoqué précédemment. L'interface homme-machine constituée par le clavier et l'écran du terminal 10 permet à l'utilisateur d'effectuer ce transfert.

Un cas d'utilisation typique du système selon l'invention est le suivant : Lorsque l'utilisateur du terminal 10 désire effectuer une sauvegarde des données personnelles présentes dans son terminal mobile, il active la fonction de sauvegarde sur son terminal 10 et l'approche du tag 15. Automatiquement, ses données personnelles seront transférées en quelques secondes dans la mémoire 16 et il n'aura plus qu'à s'en éloigner pour mettre fin à la procédure de sauvegarde. La sauvegarde des données personnelles peut être globale ou partielle, c'est-à-dire que toute ou partie des données personnelles qu'il aura au préalable sélectionnées (l'ensemble ou une partie de ses photos, l'ensemble ou une partie de son répertoire téléphonique, les derniers numéros de téléphones qu'il aura mémorisés dans son terminal, voire un message vocal ou de type SMS qu'il veut laisser à un membre de sa famille ou à un de ses collègues), sera copié dans la mémoire 16.

Le tag 15 peut donc faire office de post-it (marque déposée) électronique. Il est possible d'imaginer que l'utilisateur seul aura droit à accéder aux données personnelles mémorisées dans le tag 15, ou alors que ces données pourront être partagées entre plusieurs utilisateurs, par exemple les membres d'une famille. L'accès aux données mémorisées peut être conditionné par la vérification positive d'un mot de passe, par exemple par un code PIN de la personne qui désire lire des données présentes dans le tag 15.

La puce 17 peut comprendre un microprocesseur afin de limiter l'accès aux informations stockées dans la mémoire 16. Un mot de passe peut alors être requis pour y accéder. Il est alors également possible de permettre à plusieurs utilisateurs de terminaux mobiles d'écrire des données dans la mémoire 16 et d'en lire des données, grâce à des codes différents. Chaque utilisateur utilisera par exemple son propre code PIN pour écrire des données dans une partie de la mémoire 16 ou pour y lire des données préalablement mémorisées.

Le tag 15 peut fonctionner en UHF (900 MHz) ou en RFID (13,56 MHz), la fréquence de fonctionnement important peu.

Les données personnelles stockées dans le tag 15 peuvent être ou non sécurisées. Lorsqu'elles le sont, elles peuvent l'être par le terminal mobile 10 qui crypte les données personnelles mémorisées, par exemple à l'aide du code PIN de l'utilisateur, ou par le tag 15 lui-même, s'il comporte un microprocesseur (le tag crypte les données transférées à partir d'un code PIN préalablement transféré lors d'une phase d'initialisation ou d'apprentissage).

La figure 2 représente un deuxième mode de réalisation préférentiel du système selon l'invention.

Dans ce mode de réalisation, le terminal mobile est constitué par un ordinateur personnel 20 coopérant avec un lecteur 21 de type NFC, par exemple via une liaison USB 22. Le lecteur 21 comporte la première antenne couplée à la première puce coopérant avec la première mémoire. La première mémoire est comprise dans l'ordinateur personnel 20. De même que précédemment, le lecteur 21 communique avec le tag 15 afin de pouvoir y lire et écrire des données personnelles.

La description qui précède a été donnée à simple titre illustratif et non limitatif et l'homme du métier imaginera aisément d'autres modes de mise en oeuvre de la présente invention entrant dans le cadre des revendications.

## Revendications

1. Système de transfert de données personnelles sans contact entre d'une part un terminal mobile (10, 20, 21) comprenant une première antenne (14, 21) couplée à une première puce (13) coopérant avec une première mémoire (11, 12), et d'autre part une seconde mémoire (16) coopérant avec une seconde puce (17), ladite seconde puce (17) étant couplée avec une seconde antenne (18), **caractérisé en ce que** ladite seconde mémoire (16) coopérant avec ladite seconde puce (17) et ladite seconde antenne (18) sont comprises sur un transpondeur radiofréquence passif (15) alimenté par le champ électromagnétique émis par ladite première antenne (14, 21) pendant ledit transfert de données personnelles.

2. Système selon la revendication 1, **caractérisé en ce que** ladite première mémoire (11, 12) comporte lesdites données personnelles.

3. Système selon la revendication 1, **caractérisé en ce que** lesdites données personnelles comprennent les contacts et numéros de téléphone associés mémorisés dans ledit terminal mobile (10, 20).

4. Système selon la revendication 1, **caractérisé en ce que** ladite seconde mémoire (16) comporte lesdites données personnelles.

5. Système selon la revendication 1, **caractérisé en ce que** ledit transpondeur radiofréquence passif est constitué par un tag (15).

6. Système selon la revendication 5, **caractérisé en ce que** ledit tag (15) comporte une face adhésive de manière à le rendre solidaire d'un support.

7. Système selon la revendication 1, **caractérisé en ce que** ledit transpondeur radiofréquence passif est constitué par une carte sans contact.
